# EUROPÄISCHE PATENTANMELDUNG

(11) **EP 0 551 827 A1**
(43) Veröffentlichungstag der Anmeldung: **21.07.1993**
(21) Anmeldenummer: 93100133.3
(22) Anmeldetag: 07.01.1993
(51) Int. Cl.: B65G 15/46, B65G 21/02, B65G 21/16

(54) **Gurtförderer**

(30) Priorität: 11.01.1992 DE 4200539
(71) Anmelder: TRANSNORM SYSTEM GmbH, D-31177 Harsum (DE)
(72) Erfinder: Schöning, Uwe B., W-3200 Hildesheim (DE)
(74) Vertreter: Arendt, Helmut, Dipl.-Ing.

(57) **Zusammenfassung**

Um Fördergüter mit einem Gurtförderer von einer Aufgabestation in einer ersten Niveauebene zu einer Abgabestation in einer zweiten Niveauebene kontinuierlich transportieren zu können, ist vorgesehen, einen als Endlosgurt (7) ausgebildeten und um an den Enden der Förderstrecke angeordnete Umlenkrollen geführten Fördergurt an beiden Kanten mit Randleisten (9) zu versehen, welche zwischen einer Mehrzahl von paarweise in Reihe angeordneten Rollen (5,6) geführt sind, die der Steigungskurve des Fördergutes in unterschiedliche Ebenen folgen.

## Beschreibung

Die Erfindung betrifft einen Gurtförderer zum Transportieren von Fördergütern von einer Aufgabestation in einer ersten Ebene zu einer Abgabestation in einer zweiten Ebene.

Zum Fördern von Stückgut unter gleichzeitiger überwindung von Höhenunterschieden mit Hilfe eines Fördergurtes ist es bisher üblich gewesen, mehrere Gurtförderer hintereinander anzuordnen. Die einzelnen Förderer sind durch besondere Justiereinrichtungen aufeinander abzustimmen. Zwischen den Enden der aneinandergrenzenden Fördergurte bestehen übergangslücken. Sie bilden unstete übergänge und beeinflussen die Größe und lagegerechte übergabe des Fördergutes. Ferner ist mit einer derartigen Gesamteinrichtung ein hoher steuerungstechnischer Aufwand verbunden. Nachteilig ist auch die Vielfalt der Teile und die mehrfache externe Energieversorgung sowie ein hoher Montage- bzw. Wartungsaufwand.

Für viele zu fördernde Stückgüter, insbesondere mit sehr geringen Abmessungen und Gewichten, bieten Förderanlagen mit mehreren aneinandergrenzenden Gurtförderern nur beschränkte Einsatzmöglichkeiten. Es bleibt daher Ziel der Anlagenentwicklungen, eine Einrichtung zu schaffen, die kontinuierlich Fördergüter auch geringster Abmessungen nicht nur über längere horizontale Strecken zu fördern fähig ist, sondern dabei auch verschiedene Ebenen überwinden kann, ohne daß es besonderer Übergabestationen bedarf.

Aufgabe der Erfindung ist es daher, einen Gurtförderer für eine gerade Förderstrecke zu schaffen, mit dem Fördergüter auch sehr geringer Abmessungen von einer Aufgabestation in einer ersten Niveauebene zu einen Abgabestation in einer zweiten Niveauebene kontinuierlich transportiert werden können; ohne daß es einer eine Unstetigkeit in der Förderung verursachenden übergabestelle bedarf. Dabei ist darauf zu achten, daß insbesondere bei hohen Fördergeschwindigkeiten und zur überwindung langer, gerader Förderabschnitte eine große Richtungsstabilität erreicht wird, so daß zusätzliche technische Einrichtungen für die Einhaltung der Laufgenauigkeit entbehrlich sind. Zur Lösung der Erfindung wird vorgeschlagen, den Fördergurt als Endlosgurt auszubilden und um in den unterschiedlichen Ebenen angeordnete Umlenkrollen zu führen und an beiden Kanten mit Randleisten zu versehen, welche zwischen einer Vielzahl von paarweise in Reihe angeordneten Rollen geführt sind, die der Steigungskurve des Fördergurtes in unterschiedliche Ebenen folgen.

Die erfindungsgemäße Konstruktion ermöglicht die Bildung einer Förderlinie ohne Übergänge. Das Fördergut kann daher kontinuierlich Steigungen oder Gefälle, aber auch lange Förderstrecken ohne Höhenunterschiede überwinden. Dabei ist ein konstanter Gurtverlauf ohne die Gefahr eines seitlichen Auslenkens gewährleistet. Das Fördern von Stückgut kleinster Abmessungen ist völlig unproblematisch. Der steuerungstechnische Aufwand beschränkt sich auf den Antrieb eines einziges Fördergurtes.

Besonders vorteilhaft ist der Einsatz von Rollenpaaren, deren Achsen einen Winkel miteinander einschließen und symmetrisch zum Fördergut so angeordnet sind, daß sie in Richtung zu den Gurträndern divergieren und die innenliegenden Seitenflächen der Gurtrandleisten durch die Laufflächen der Rollen abgestützt sind. Die paarweise angeordneten Rollen sind vorzugsweise in Haltern angeordnet, die aus mehreren, leicht voneinander trennbaren Teilen bestehen. Der Gurt kann leicht in der Kontur der Förderbahn gehalten werden. Das den Förderer stützende Trägerprofil weist einen oder mehrere, die Höhendifferenzen überbrückende Bogenstücke auf. An dem Prägerprofil sind die Halter der Rollenpaare befestigt. Insgesamt ist dadurch sichergestellt, daß bei hohen Fördergeschwindigkeiten auch kleinstes, in seinen Abmessungen und Gewichten unterschiedliches, auch loses Fördergut, schonend und lagegerecht zwischen der Aufgabestation und der Abgabestation transportiert werden kann und dabei verschiedene Höhen überwindet.

Die Konstruktion gewährleistet eine geringe Teilevielfalt, eine rein mechanische Lösung und durch die trennbar ausgeführten Halter einen geringen Fertigungs-, Montage- und Wartungsaufwand.
Das erfindungsgemäße Führungsprinzip gewährleistet eine außerordentlich große Richtungsstabilität, die durch die Praxis häufig gefordert wird. Dadurch kann auf zusätzliche, technisch aufwendige und anfällige überwachungs und Justiereinrichtungen, wie Pneumatikzylinder oder elektromagnetisch betätigbare Kolben, die gegen die Steuerrollenachsen fahrbar sind, um diese bei beginnenden Abweichungen zu verschieben, verzichtet werden.

Weitere, den Erfindungsgegenstand vorteilhaft gestaltende Merkmale sind in den Unteransprüchen angegeben.

In der Zeichnung ist ein Ausführungsbeispiel der Erfindung schematisch dargestellt und nachstehend erläutert. Es zeigen:
- Fig. 1: die Seitenansicht einer Förderanlage und
- Fig. 2: einen Querschnitt durch den Förderer in wesentlich größerem Maßstab.

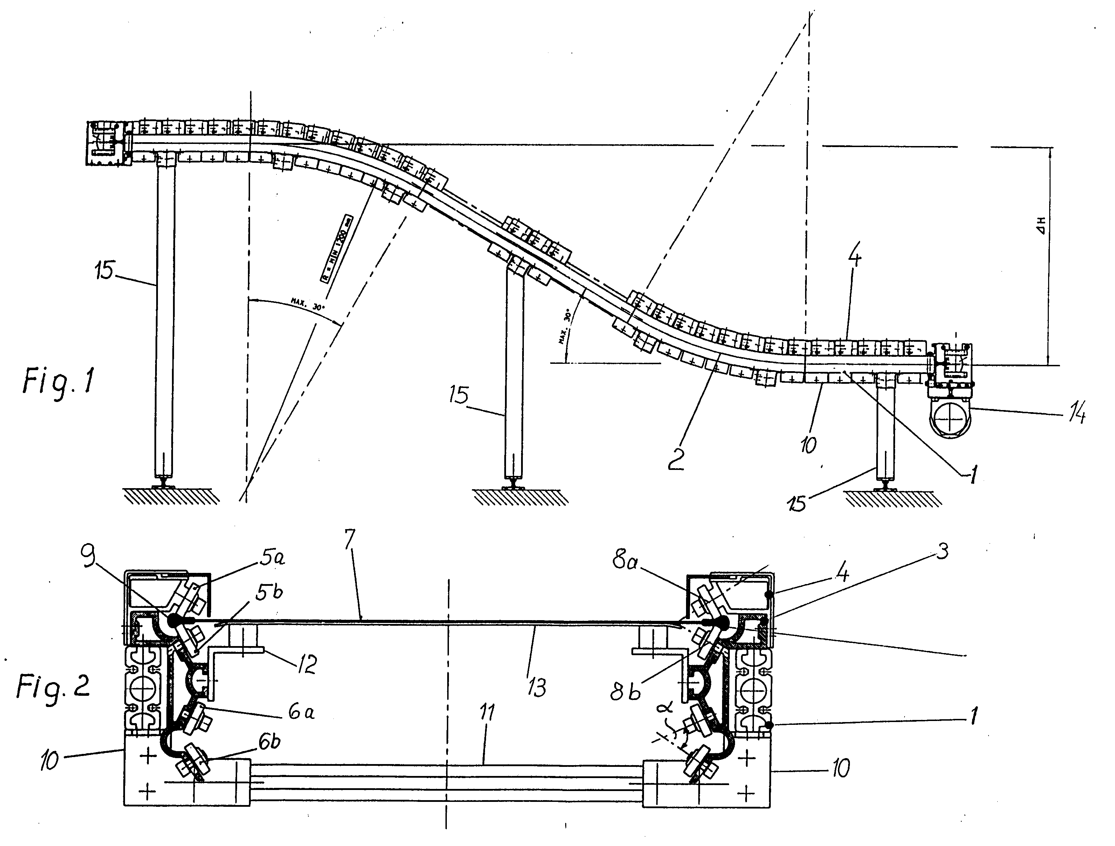

Die Darstellung gemäß Fig. 1 läßt die kontinuierliche Überwindung der Höhendifferenz Δ H zwei verschiedener Ebenen einer Förderstrecke durch den Gurtförderer erkennen. Die Trägerprofile 1 folgen zu diesem Zweck kontinuierlich der vorgegebenen Transport und Steigungskurve 2. An den Trägerprofilen sind Halteprofile 3 und 4 durch nicht dargestellte Schrauben und Nutensteine lösbar befestigt. Die Halteprofile 3 und 4 dienen der Befestigung der paarweise angeordneten Rollen 5a, 5b für den oberen Gurttrum 7 und der Rollen 6a, 6b für den unteren, nicht dargestellten Gurttrum. Die Tragprofile 1 mit den daran befestigten Halteprofilen 3 und 4 werden wiederum von Stützprofilen 10 getragen, die mit Hilfe von Traversen 11 untereinander verbunden sind. Die Achsen 8a und 8b der Rollen schließen einen Winkelmiteinander ein, und zwar derart, daß Sie in Richtung der Gurtränder divergieren und die innenliegenden Seitenflächen der Randleisten 9 durch die Laufflächen der Rollen abgestützt sind.

An den Halteprofilen 3 sind ferner Tragwinkel 12 für die Gurtabtragung 13 befestigt, die der Steigungskurve des Gurtes 7 ebenfalls ohne Unterbrechung folgt. Der Fördergurt bildet somit eine stetige Förderkurve zur überwindung von Höhendifferenzen.

An den Enden ist der in Endlosform eingesetzte Fördergurt über nicht näher dargestellte Umlenk und Antriebsrollen umgelenkt. Darüberhinaus ist bei dem gezeigten beispiel die untere Umlenktrommel gleichzeitig als Antriebselement ausgebildet und wird von einem elektrischen Getriebemotor 14 angetrieben.

Die Stützprofile 10 und somit die Trägerprofile 1 in ihrer ganzen Länge werden von Stützen 15 unterschiedlicher Länge getragen.

Die spezielle Führung der Randleisten durch die paarweise und über die gesamte Förderstrecke verteilt angeordneten Rollen in Verbindung mit der besonderen Ausbildung der Gurtkanten ermöglichen bei dauerhaftem Betrieb die angestrebte kontinuierliche überwindung von Höhendifferenzen.

## Patentansprüche

1. Gurtförderer mit einem eine gerade Förderstrecke bildenden Fördergurt zum Transportieren von Fördergütern von einer Aufgabestation in einer ersten Ebene zu einer Abgabestation in einer zweiten Ebene, dadurch gekennzeichnet, daß der Fördergurt (7) als Endlosgurt ausgebildet, um an den Enden der Förderstrecke angeordnete Umlenkrollen geführt und an beiden Kanten mit Randleisten (9) versehen ist, welche zwischen einer Mehrzahl von paarweise in Reihe angeordneten Rollen (5, 6) geführt sind, die der Steigungskurve des Fördergutes in unterschiedliche Ebenen folgen.

2. Gurtförderer nach Anspruch 1, dadurch gekennzeichnet, daß die Achsen (8) der Rollenpaare (5a, 5b, 6a, 6b) einen Winkel (α) miteinänder einschließen und symmetrisch zum Fördergurt derart angeordnet sind, daß sie in Richtung der Gurtränder divergieren und die innenliegenden Seitenflächen der Randleisten (9) durch die Laufflächen der Rollen abgestützt sind.

3. Gurtförderer nach Anspruch 1 oder 2, dadurch gekennzeichnet, daß die Rollen an einem im Querschnitt mehrteiligen, tragenden Rahmen drehbar befestigt sind, bestehend aus einem Trägerprofil (1) mit daran befestigbaren Haltern (3,4) für die paarweise angeordneten Rollen und mit einem Gurttisch (13), wobei die Einzelteile des Rahmens ineinander steckbar, gegeneinander verschiebbar und lösbar miteinander verbunden sind.

4. Gurtförderer nach Anspruch 3, dadurch gekennzeichnet, daß die Halter mit Schrauben und Nutensteinen in Längsschlitze des Trägerprofiles greifen und an diesem zur genauen Ausrichtung in Längsrichtung verschiebbar durch Schrauben fixierbar sind.

5. Gurtförderer nach einem der Ansprüche 1 bis 4, dadurch gekennzeichnet, daß das Trägerprofil und die Halter aus Strangpressprofilen bestehen.

6. Gurtförderer nach einem der Ansprüche 1 bis 5, dadurch gekennzeichnet, daß die Randleisten in Form von Längswulsten ausgebildet und mit sich über ihre gesamte länge, erstreckenden, radial einwärts von den Kraftangriffspunkten der Führungsrolle an den Längswulsten befindlichen flächigen Ansätzen mit Gurtaufnahmeschlitzen versehen sind, über welche das Förderband mit den Randleisten fest verbunden ist.

7. Gurtförderer nach einem der Ansprüche 1 bis 6, dadurch gekennzeichnet, daß die Niveauunterschiede der Ebenen der Auf- und Abgabestationen des Förderers sowie die Steigungen der gesamten Förderstrecke Null sind.
